(19) **Europäisches Patentamt / European Patent Office / Office européen des brevets**

(11) **EP 3 025 477 B1**

(12) **FASCICULE DE BREVET EUROPEEN**

(45) Date de publication et mention de la délivrance du brevet:
**04.09.2019 Bulletin 2019/36**

(21) Numéro de dépôt: **14755871.2**

(22) Date de dépôt: **22.07.2014**

(51) Int Cl.:
*H04L 29/06* (2006.01)      *H04L 29/08* (2006.01)

(86) Numéro de dépôt international:
**PCT/FR2014/051886**

(87) Numéro de publication internationale:
**WO 2015/011398 (29.01.2015 Gazette 2015/04)**

(54) **PROCEDE DE SYNCHRONISATION LORS DU TRAITEMENT PAR UN LECTEUR MULTIMEDIA D'UN CONTENU MULTIMEDIA TRANSMIS PAR UN SERVICE MBMS**

VERFAHREN ZUR SYNCHRONISATION WÄHREND DER VERARBEITUNG EINES VON EINEM MBMS-DIENST ÜBERTRAGENEN MULTIMEDIA-INHALTS DURCH EINEN MULTIMEDIA-PLAYER

METHOD OF SYNCHRONISATION DURING THE PROCESSING, BY A MULTIMEDIA PLAYER, OF AN ITEM OF MULTIMEDIA CONTENT TRANSMITTED BY AN MBMS SERVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.07.2013 FR 1357317**

(43) Date de publication de la demande:
**01.06.2016 Bulletin 2016/22**

(73) Titulaire: **Expway**
**75009 Paris (FR)**

(72) Inventeurs:
- **LAMBERT, David**
  **F-75004 Paris (FR)**
- **LAHORE-CARRATE, Romain**
  **F-93110 Rosny sous Bois (FR)**
- **LE FEUVRE, Jean**
  **F-94230 Cachan (FR)**
- **THIENOT, Cédric**
  **F-75010 Paris (FR)**

(74) Mandataire: **de Roquemaurel, Bruno et al**
**OMNIPAT**
**24 Place des Martyrs de la Résistance**
**13100 Aix en Provence (FR)**

(56) Documents cités:
WO-A1-2013/033565      US-A1- 2013 007 223
US-A1- 2013 097 287

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne la transmission d'un flux de données entre un serveur et un ou plusieurs équipements d'utilisateurs, par l'intermédiaire de plusieurs réseaux différents comprenant un réseau mobile. La présente invention s'applique notamment à la transmission de flux multimédia comme les flux vidéo et audio.

Les réseaux de transmission par paquet ou trame mettent généralement en oeuvre soit des communications en mode point-à-point (également appelées "Unicast"), soit des communications en mode point-à-multipoint (également appelées "Multicast"). Généralement, une communication point-à-point est établie entre un unique émetteur et un unique récepteur, tandis qu'une communication point-à-multipoint est établie entre un unique émetteur et plusieurs récepteurs. Dans une communication point-à-multipoint, les récepteurs se joignent dans une session de groupe pour recevoir un même flux de données transmis par une infrastructure de réseau. L'émetteur du flux de donnée n'a pas à connaître l'identité des récepteurs puisqu'il n'émet qu'une seule copie du flux de données, lequel est dupliqué seulement lorsque cela nécessaire pour atteindre les différents récepteurs du groupe. Le mode point-à-multipoint présente donc l'avantage de moins charger les réseaux que le mode point-à-point, lorsqu'un même flux est requis par plusieurs utilisateurs.

Le service de diffusion ou point-à-multipoint de contenu multimédia MBMS (Multimedia Broadcast Multicast Service) a été développé pour distribuer un même contenu multimédia dans les réseaux mobiles à un grand nombre d'utilisateurs. Ce service permet de transmettre en mode diffusion ou point-à-multipoint un contenu multimédia requis par plusieurs utilisateurs, par exemple au format défini par le standard MPEG-DASH (Moving Picture Experts Group - Dynamic Adaptive Streaming over HTTP - Hypertext Transfer Protocol). Ce service n'est effectif que dans les cellules d'un réseau mobile dans lesquelles plusieurs utilisateurs ont requis un même contenu multimédia.

Le standard MPEG-DASH définit une structure permettant d'organiser des données multimédia en segments de manière à pouvoir être restitués sans sauts.

Le document US 2013/007223 décrit un procédé de restitution de contenus multimédia sous la forme de segments associés à des fichiers MPD (Media Presentation Description) descripteurs de segments définissant notamment une base de temps relative pour la restitution d'un contenu multimédia.

Cependant, le bon fonctionnement d'une session MPEG-DASH requiert une synchronisation entre le serveur fournissant le contenu multimédia et l'équipement de l'utilisateur, en particulier lorsque le contenu multimédia est produit au fur et à mesure qu'il doit être diffusé (par exemple dans le cas d'une diffusion en direct). En effet, pour déterminer un segment de données à restituer à un instant donné, l'équipement de l'utilisateur doit estimer le temps écoulé entre le début d'une période, disponible en temps absolu, fourni par le serveur dans un fichier de description du contenu multimédia, et l'heure courante côté équipement de l'utilisateur. Si l'erreur d'estimation est trop élevée, le segment de données requis par l'équipement de l'utilisateur n'est plus ou pas encore disponible, ce qui produit une erreur.

Or le service MBMS nécessite d'appliquer aux flux multimédia des traitements introduisant des temps de latence variables qui peuvent être relativement importants. Il est également fréquent que les horloges internes des équipements des utilisateurs ne soient pas synchronisées sur le temps universel (UTC). En outre, dans le cas où un contenu multimédia préalablement stocké est restitué en différé, l'heure de restitution associée à chaque segment pour une restitution en direct, ne correspond pas à l'heure courante de la restitution du contenu multimédia. Des problèmes de synchronisation apparaissent également lorsqu'un équipement d'un utilisateur sort d'une zone couverte par un réseau mobile. La simple transmission de l'heure absolue du serveur ne permet pas de resynchroniser l'équipement de l'utilisateur car les temps de latence ne sont pas pris en compte.

Il est donc souhaitable de synchroniser ou resynchroniser un équipement d'utilisateur avec un serveur fournissant du contenu multimédia notamment par un service MBMS. Il peut être également souhaitable que des équipements d'utilisateur situés dans un même lieu restituent de manière synchrone un même contenu multimédia, en particulier lorsque les segments du contenu multimédia ont une durée relativement longue.

Des modes de réalisation concernent un procédé de restitution d'un contenu multimédia par des équipements d'utilisateurs, le procédé comprenant des étapes consistant à : recevoir des segments d'un contenu multimédia par un serveur, et stocker les segments reçus dans une mémoire tampon, et transmettre d'un lecteur multimédia d'un équipement d'un utilisateur au serveur une requête de segment, transmettre en réponse du serveur au lecteur multimédia un segment requis, si celui-ci se trouve dans la mémoire tampon, transmettre du lecteur multimédia au serveur une requête de données de synchronisation, et transmettre du serveur au lecteur multimédia en réponse à la requête des données de synchronisation comprenant un identifiant d'un dernier segment reçu, et une donnée de définition de l'heure de réception du dernier segment par l'équipement de l'utilisateur, la donnée de définition de l'heure étant l'heure courante de réception du dernier segment par le serveur, fournie par une horloge de l'équipement de l'utilisateur, ou un temps écoulé entre l'instant de réception du dernier segment par le serveur et l'instant de transmission des données de synchronisation.

Selon un mode de réalisation, les données de synchronisation sont transmises dans une entête de réponse HTTP ou dans un fichier.

Selon un mode de réalisation, des données de description du contenu multimédia sont reçues par le serveur ou par le lecteur multimédia.

Selon un mode de réalisation, les données de synchronisation comprennent une donnée relative au nombre de segments susceptibles d'être mémorisés dans la mémoire tampon,

Selon un mode de réalisation, la donnée de définition de l'heure de réception du dernier segment est le temps écoulé entre l'instant de réception du dernier segment par le serveur et l'instant de transmission des données de synchronisation, le lecteur multimédia mémorisant l'heure de réception des données de synchronisation et déterminant l'heure de réception du début du segment identifié dans les données de synchronisation en fonction de l'heure de réception des données de synchronisation et du temps écoulé figurant dans les données de synchronisation.

Selon un mode de réalisation, la requête de données de synchronisation est émise à la suite d'une erreur de synchronisation entre un serveur de contenu multimédia et le lecteur multimédia.

Selon un mode de réalisation, l'erreur de synchronisation se produit lors d'une requête d'un segment non disponible dans la mémoire tampon.

Selon un mode de réalisation, la requête de données de synchronisation est émise avant de requérir un premier segment du contenu multimédia ou à la suite de la réception du premier segment.

Selon un mode de réalisation, le procédé comprend une étape de détermination par le lecteur multimédia d'un identifiant de segment à requérir au serveur et à reproduire, en fonction d'un écart entre l'heure courante, l'heure de réception du dernier segment et la durée de chaque segment.

Selon un mode de réalisation, le contenu multimédia est diffusé conformément au standard DASH-MPEG, par un service MBMS.

Des modes de réalisation concernent également un système de diffusion de contenu multimédia comprenant un serveur de contenus multimédia configuré pour émettre des contenus multimédia par segment, et des équipements d'utilisateurs configurés pour mettre en oeuvre le procédé tel que défini précédemment.

Des modes de réalisation concernent également un équipement d'utilisateur comprenant un serveur configuré pour mettre en oeuvre le procédé tel que défini précédemment.

Des exemples de réalisation de l'invention seront décrits dans ce qui suit, à titre non limitatif en relation avec les figures jointes parmi lesquelles :

la figure 1 représente schématiquement un système de transmission de contenu multimédia entre un serveur de contenu et des équipements d'utilisateurs, mettant en oeuvre un service MBMP,
les figures 2A, 2B représentent schématiquement un équipement d'utilisateur,
la figure 3 représente schématiquement des étapes de synchronisation entre un serveur de contenu multimédia et un équipement d'un utilisateur, selon un mode de réalisation,
la figure 4 représente schématiquement une structure de données décrivant un contenu multimédia, selon un mode de réalisation.

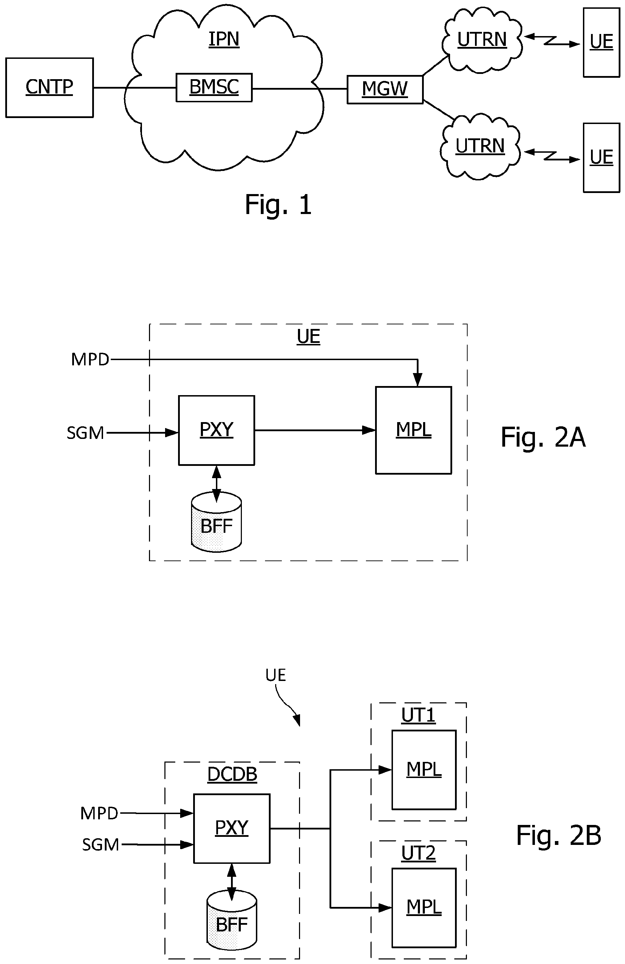

La figure 1 représente un système mettant en oeuvre un service de diffusion ou de transmission point-à-multipoint de contenu multimédia MBMS (Multimedia Broadcast Multicast Service). Ce service est décrit dans le document 3GPP TS 26.346 V11.5.0 (2013). Le système comprend un ou plusieurs serveurs de contenu CNTP, un réseau IPN tel que le réseau Internet, un serveur BMSC mettant en oeuvre le service MBMS, relié au serveur CNTP par le réseau IPN, une passerelle MGW entre le serveur BMSC et des réseaux mobiles UTRN, et des équipements d'utilisateur UE connectés chacun à l'un des réseaux mobile UTRN. Le serveur CNTP transmet des contenus multimédia par exemple conformes au standard MPEG-DASH, comprenant des segments associés à un descripteur MPD spécifiant la structure du contenu multimédia.

La figure 2A représente un équipement d'utilisateur UE. L'équipement UE comprend un lecteur multimédia MPL et un serveur mandataire (proxy) PXY connecté à une mémoire tampon BFF. L'équipement UE reçoit des contenus multimédia par exemple du serveur CNTP, sous la forme de segments SGM et d'un descripteur MPD. Les segments SGM sont transmis au serveur PXY pour être stockés dans la mémoire BFF et fournis à la demande au lecteur MPL. L'heure de réception du début de chaque segment est également inscrite dans la mémoire BFF en association avec le contenu du segment. Le descripteur MPD est transmis directement au lecteur MPL.

L'équipement UE peut être un téléphone mobile tel qu'un smartphone ou une tablette numérique, exécutant une ou plusieurs applications implémentant le serveur PXY et le lecteur MPL.

La figure 2B représente un autre type d'équipement d'utilisateur UE comprenant un boitier décodeur Internet (set-top-box) DCDB implémentant le serveur PXY et la mémoire BFF, et un ou plusieurs terminaux fixes ou mobiles UT1, UT2 connectés au boitier DCDB par une liaison telle que Ethernet ou WiFi et exécutant une application implémentant un lecteur multimédia MPL. Le descripteur MPD peut alors être transmis au boitier DCDB pour être distribué aux terminaux UT1, UT2.

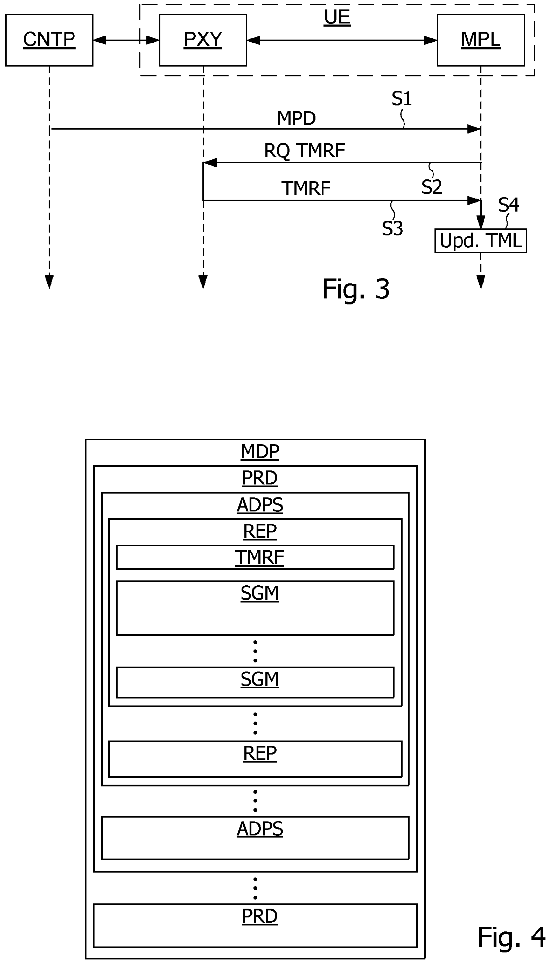

La figure 3 représente des étapes S1 à S4 exécutées notamment par l'équipement UE pour se synchroniser avec le serveur CNTP, selon un mode de réalisation. A l'étape S1, le lecteur MPL de l'équipement UE reçoit le descripteur MPD du serveur CNTP. A l'étape S2, le lecteur MPL transmet au serveur PXY une requête de synchronisation. A l'étape S3, le serveur PXY répond à la requête de synchronisation en transmettant un élément TMRF contenant des données de synchronisation permettant au lecteur MPL de se synchroniser avec le serveur CNTP. A la réception de l'élément TMRF, à l'étape S4, le lecteur MPL procède à une synchronisation, consistant à calculer un écart entre une base de temps du serveur CNTP et une base de temps de l'équipement UE, sur la base des données transmises dans l'élément TMRF. Lorsque le serveur PXY et le lecteur MPL ne sont pas implémentés dans un même appareil, les communications entre eux peuvent être effectuées par tout moyen.

L'étape S2 peut être déclenchée lorsque le serveur PXY ne peut pas satisfaire une requête de segment émise par le lecteur MPL, soit parce que le segment n'est plus dans la mémoire BFF, soit parce que le segment n'a pas encore été reçu et stocké dans la mémoire par le serveur PXY. Les étapes S2 à S4 permettent au lecteur MPL de déterminer quels sont les segments mémorisés dans la mémoire BFF et quand s'est produite la réception du début du dernier segment.

La figure 4 représente la structure du descripteur MPD. Conformément au standard DASH-MPEG, un descripteur MPD comprend un ou plusieurs champs PRD représentant chacun la structure d'une période d'un contenu multimédia, durant laquelle un ensemble de versions encodées d'un contenu multimédia est disponible. Une période PRD comprend un ou plusieurs ensembles d'adaptation ADPS. Un ensemble ADPS rassemble des versions encodées d'un ou plusieurs composants d'un contenu multimédia. Par exemple, il peut y avoir un ensemble ADPS pour un composant vidéo principal et un ensemble ADPS pour un composant audio principal. Un ensemble ADPS comprend plusieurs descripteurs de représentations REP. Une représentation décrit une version encodée d'un ou plusieurs composants multimédia. Une représentation peut comprendre plusieurs flux multimédia. Une représentation peut être divisée en segments associés chacun à une adresse URL (Uniform Ressource Locator). Un segment constitue donc la plus grande unité de donnée multimédia pouvant être obtenue à l'aide d'une unique requête HTTP. Les segments sont associés à une durée correspondant au temps de lecture du segment à une vitesse normale. Typiquement, tous les segments d'une même représentation ont la même durée qui peut changer d'une période PRD à l'autre ou d'un descripteur MPD à l'autre. Les segments contiennent des données de définition d'une ligne de temps par rapport à une même ligne de temps partagée par tous les segments. Une autre ligne de temps permet de déterminer la disponibilité d'un segment au niveau d'un lecteur multimédia. Avant de requérir un segment d'une diffusion en direct, le lecteur multimédia compare l'heure courante avec l'heure de disponibilité du segment. Plus de détails sur la structure MPD peuvent être obtenus dans le document ISO/IEC 23009-1:2012(E).

Selon un mode de réalisation, les représentations REP ou les périodes PRD d'un descripteur MPD comprennent chacune un champ (@xlink:href en langage XML - Extended Mark-Up Language) prévu pour recevoir un lien vers un élément TMRF contenant des données de synchronisation. L'élément TMRF transmis par le serveur PXY peut comprendre les informations rassemblées dans le tableau 1 suivant :

Tableau1

| Nom d'élément ou d'attribut | Description |
|---|---|
| TMRF | Description de l'élément TMRF |
| @availableSegmentName | spécifie le nom du dernier segment disponible pour cette représentation, au moment de la lecture du descripteur MPD si aucun lien xlink:href est utilisé, sinon, au moment de résoudre le lien xlink:href. |
| @ellapsedTime | spécifie le temps écoulé en secondes depuis le temps availabilityStartTime du segment identifié par availableSegmentName. La valeur par défaut est '0' |
| @timeShiftSegments | spécifie le nombre de segments disponibles pour une lecture différée, en excluant le segment identifié par availableSegmentName. Si non spécifié, la valeur de timeShiftBuffer s'applique à cette représentation. |
| @timeShiftBuffer | spécifie le temps de lecture de la mémoire tampon pour la lecture différée pour cette représentation, garanti disponible pour une diffusion en direct. Si non spécifié, la valeur de timeShiftSegment s'applique à cette représentation. |

Seul l'attribut @availableSegmentName est obligatoire.

L'élément TMRF permet ainsi au lecteur MPL de disposer du nom du segment en fin de chargement (@availableSegmentName) dans la mémoire BFF. A partir de l'attribut @ellapsedTime et de la durée d'un segment spécifiée dans le descripteur MPD, le lecteur MPL peut déterminer quand le segment @availableSegmentName et les segments suivants seront disponibles dans la mémoire BFF. Ainsi, le segment @availableSegmentName est disponible à l'instant :

$$T(TMRF) - TMRF@ellapsedTime \qquad (1)$$

où T(TMRF) est l'heure de réception de l'élément TMRF.

Le Nième segment suivant est disponible à l'instant

$$T(TMRF) - TMRF@ellapsedTime + SGMD \times N \qquad (2)$$

où SGMD est la durée d'un segment, telle que spécifiée dans le descripteur MPD.

Le lecteur MPL peut également déterminer le nombre N de segments supposés reçus à un instant T depuis la réception de l'élément TMRF, par la formule suivante :

$$N = Floor[(T - T(TMRF) + TMRF@ellapsedTime)/SGMD] \qquad (3)$$

où Floor(x) est une fonction donnant la partie entière du nombre x.

Les noms des segments étant généralement numérotés, le lecteur MPL peut déterminer les noms des segments disponibles dans la mémoire BFF, à partir du nombre de segments disponibles dans la mémoire BFF (à partir de @availableSegmentName ou de @timeShiftBuffer et de la durée d'un segment spécifiée dans le descripteur MPD).

Le serveur PXY peut transmettre l'élément TMRF en l'insérant dans le descripteur MPD à la place du lien @xlink:href, s'il connaît la structure du descripteur MPD. Dans ce cas, le serveur PXY reçoit le descripteur MPD et le transmet au lecteur MPL.

Il apparaîtra clairement à l'homme de l'art que la présente invention est susceptible de diverses variantes de réalisation et diverses applications. En particulier, l'invention n'est pas limitée au contenu de l'élément TMRF tel que défini dans le tableau 1. En effet, l'attribut @ellapsedTime peut être remplacé par une heure absolue relevée à une horloge de l'équipement de l'utilisateur. Les attributs @timeShiftSegments et @timeShiftBuffer peuvent également être omis, sachant que ces attributs permettent non pas de synchroniser l'équipement de l'utilisateur, mais de déterminer de combien de segments un lecteur multimédia peut revenir en arrière, dans la restitution d'un contenu multimédia.

La présente invention ne s'applique pas non plus uniquement à un service MBMS. Elle peut s'appliquer également à une transmission de type point-à-point (unicast) entre un serveur de contenu multimédia et un équipement d'utilisateur comprenant un boitier décodeur Internet. Les données multimédia peuvent être transmises conformément au standard HTTP Live Streaming.

Les opérations effectuées par le serveur mandataire PXY peuvent également être effectuées par un serveur distant, par exemple le serveur CNTP, qui aurait mémorisé un contenu multimédia pour le diffuser en différé, sans modifier la ligne de temps des segments du contenu multimédia, c'est-à-dire les heures de restitution de chaque segment.

Les requêtes de synchronisations peuvent être émises par le lecteur multimédia à tout instant, avant de requérir un premier segment de contenu multimédia, à la suite de la réception du premier segment ou à chaque segment.

## Revendications

**1.** Procédé de restitution d'un contenu multimédia par des équipements d'utilisateurs, le procédé comprenant des étapes consistant à :

recevoir des segments d'un contenu multimédia par un serveur mandataire (PXY) d'un équipement (UE) d'un utilisateur en provenance d'un serveur de contenu (CNTP), et stocker les segments reçus dans une mémoire tampon (BFF), et

transmettre d'un lecteur multimédia (MPL) de l'équipement d'utilisateur (UE) au serveur mandataire (PXY) une requête de segment, et transmettre en réponse du serveur mandataire au lecteur multimédia un segment requis, si celui-ci se trouve dans la mémoire tampon,

transmettre du lecteur multimédia au serveur mandataire une requête de données de synchronisation (TMRF), et transmettre du serveur mandataire au lecteur multimédia en réponse à la requête des données de synchronisation comprenant un identifiant d'un dernier segment reçu, et une donnée de définition de l'heure de réception du dernier segment par l'équipement de l'utilisateur, la donnée de définition de l'heure étant l'heure courante de réception du dernier segment par le serveur mandataire, fournie par une horloge de l'équipement de l'utilisateur, ou un temps écoulé entre l'instant de réception du dernier segment par le serveur mandataire et l'instant de transmission des données de synchronisation.

**2.** Procédé selon la revendication 1, dans lequel les données de synchronisation sont transmises dans une entête de réponse HTTP ou dans un fichier.

**3.** Procédé selon la revendication 1 ou 2, dans lequel des données de description du contenu multimédia (MPD) sont reçues par le serveur mandataire (PXY) ou par le lecteur multimédia (MPL).

**4.** Procédé selon l'une des revendications 1 à 3, dans lequel les données de synchronisation comprennent une donnée relative au nombre de segments susceptibles d'être mémorisés dans la mémoire tampon (BFF),

**5.** Procédé selon l'une des revendications 1 à 3, dans lequel la donnée de définition de l'heure de réception du dernier segment est le temps écoulé entre l'instant de réception du dernier segment par le serveur mandataire (PXY) et l'instant de transmission des données de synchronisation (TMRF), le lecteur multimédia (MPL) mémorisant l'heure de réception des données de synchronisation et déterminant l'heure de réception du début du segment identifié dans les données de synchronisation en fonction de l'heure de réception des données de synchronisation et du temps écoulé figurant dans les données de synchronisation.

**6.** Procédé selon l'une des revendications 1 à 5, dans lequel la requête de données de synchronisation est émise à la suite d'une erreur de synchronisation entre un serveur de contenu multimédia (CNTP) et le lecteur multimédia (MPL).

**7.** Procédé selon la revendication 6, dans lequel l'erreur de synchronisation se produit lors d'une requête d'un segment non disponible dans la mémoire tampon (BFF).

**8.** Procédé selon l'une des revendications 1 à 7, dans lequel la requête de données de synchronisation est émise avant de requérir un premier segment du contenu multimédia ou à la suite de la réception du premier segment.

**9.** Procédé selon l'une des revendications 1 à 8, comprenant une étape de détermination par le lecteur multimédia d'un identifiant de segment à requérir au serveur et à reproduire, en fonction d'un écart entre l'heure courante, l'heure de réception du dernier segment et la durée de chaque segment.

**10.** Procédé selon l'une des revendications 1 à 9, dans lequel le contenu multimédia est diffusé conformément au standard DASH-MPEG, par un service MBMS.

**11.** Système de diffusion de contenu multimédia comprenant un serveur de contenus multimédia (CNTP) configuré pour émettre des contenus multimédia par segment, et des équipements d'utilisateurs (UE) configurés pour mettre en oeuvre le procédé selon l'une des revendications 1 à 10.

**12.** Equipement d'utilisateur comprenant un serveur mandataire (PXY) configuré pour mettre en oeuvre le procédé selon l'une des revendications 1 à 10.


**Patentansprüche**

**1.** Verfahren zur Bereitstellung eines Multimedia-Contents durch Benutzerausrüstungen, wobei das Verfahren die folgenden Schritte umfasst:

Empfangen der Segmente eines Multimedia-Contents durch einen Proxy-Server (PXY) einer Ausrüstung (UE) eines Benutzers von einem Content-Server (CNTP) und Speichern der empfangenen Segmente in einem Pufferspeicher (BFF) und
Übertragen einer Segmentanforderung von einem Multimedia-Player (MPL) der Benutzerausrüstung (UE) an den Proxy-Server (PXY) und Übertragen, als Antwort des Proxy-Servers, eines angeforderten Segments an den Multimedia-Player, wenn sich dieses im Pufferspeicher befindet,
Übertragen, vom Multimedia-Player an den Proxy-Server, einer Synchronisationsdatenanforderung (TMRF), und
Übertragen, von dem Proxy-Server an den Multimedia-Player als Antwort auf die Anforderung der Synchronisationsdaten, umfassend eine Kennung eines zuletzt empfangenen Segments und eine Definitionsangabe der Empfangszeit des letzten Segments durch die Ausrüstung des Benutzers, wobei die Definitionsangabe der Uhrzeit die aktuelle Empfangszeit des letzten Segments durch den Proxy-Server ist, bereitgestellt durch eine Uhr der Ausrüstung des Benutzers, oder eine zwischen dem Empfangsmoment des letzten Segments durch den Proxy-Server und dem Übertragungsmoment der Synchronisationsdaten verstrichene Zeit.

2. Verfahren nach Anspruch 1, wobei die Synchronisationsdaten in einem HTTP-Response-Header oder in einer Datei übertragen werden.

3. Verfahren nach Anspruch 1 oder 2, wobei die Beschreibungsdaten des Multimedia-Contents (MPD) vom Proxy-Server (PXY) oder vom Multimedia-Player (MPL) empfangen werden.

4. Verfahren nach einem der Ansprüche 1 bis 3, wobei die Synchronisationsdaten eine Angabe beinhalten, die sich auf die Anzahl der Segmente bezieht, die im Pufferspeicher (BFF) gespeichert sein können.

5. Verfahren nach einem der Ansprüche 1 bis 3, wobei die Definitionsangabe der Empfangszeit des letzten Segments die zwischen dem Empfangszeitpunkt des letzten Segments durch den Proxy-Server (PXY) und dem Übertragungszeitpunkt der Synchronisationsdaten (TMRF) verstrichene Zeit ist, wobei der Multimedia-Player (MPL) die Empfangszeit der Synchronisationsdaten speichert und die Empfangszeit des Beginns des in den Synchronisationsdaten identifizierten Segments in Abhängigkeit von der Empfangszeit der Synchronisationsdaten und der verstrichenen Zeit, die aus den Synchronisationsdaten hervorgeht, bestimmt.

6. Verfahren nach einem der Ansprüche 1 bis 5, wobei die Synchronisationsdatenanforderung infolge eines Synchronisationsfehlers zwischen einem Multimedia-Content-Server (CNTP) und dem Multimedia-Player (MPL) gesendet wird.

7. Verfahren nach Anspruch 6, wobei der Synchronisationsfehler bei einer Anforderung eines im Pufferspeicher (BFF) nicht verfügbaren Segments auftritt.

8. Verfahren nach einem der Ansprüche 1 bis 7, wobei die Synchronisationsdatenanforderung vor der Anforderung eines ersten Segments des Multimedia-Contents oder nach dem Empfang des ersten Segments gesendet wird.

9. Verfahren nach einem der Ansprüche 1 bis 8, umfassend einen Schritt des Bestimmens, durch den Multimedia-Player, einer Segmentkennung, die vom Server anzufordern und in Abhängigkeit von einer Differenz zwischen der aktuellen Zeit, der Empfangszeit des letzten Segments und der Dauer jedes Segments zu reproduzieren ist.

10. Verfahren nach einem der Ansprüche 1 bis 9, wobei der Multimedia-Content gemäß dem DASH-MPEG-Standard durch einen MBMS-Dienst übertragen wird.

11. System zur Verbreitung von Multimedia-Content, umfassend einen Server von Multimedia-Content (CNTP), der konfiguriert ist, um segmentierte Multimedia-Contents zu senden, und Benutzerausrüstungen (UE), die konfiguriert ist, um das Verfahren nach einem der Ansprüche 1 bis 10 durchzuführen.

12. Benutzerausrüstung, umfassend einen Proxy-Server (PXY), der konfiguriert ist, um das Verfahren nach einem der Ansprüche 1 bis 10 durchzuführen.

## Claims

1. Method for playing back multimedia content by means of user equipment, the method comprising steps of:

receiving segments of multimedia content by a proxy server (PXY) of a user's equipment (UE) from a content server (CNTP), and storing the received segments in a buffer memory (BFF), and
transmitting a segment request from a multimedia player (MPL) of the user equipment (UE) to the proxy server (PXY), and transmitting, in response to the request, a requested segment from the proxy server to the multimedia player if said segment is present in the buffer memory,
transmitting a request for synchronization data (TMRF) from the multimedia player to the proxy server, and transmitting, in response to the request, synchronization data from the proxy server to the multimedia player, which data include an identifier of a last received segment and an item of data defining the time at which the last segment is received by the user's equipment, the item of data defining the time being the current time at which the last segment is received by the proxy server, provided by a clock of the user's equipment, or the time elapsed between the moment at which the last segment is received by the proxy server and the moment at which the synchronization data are transmitted.

2. Method according to claim 1, wherein the synchronization data are transmitted in an HTTP response header or in a file.

3. Method according to either claim 1 or claim 2, wherein data describing multimedia content (MPD) are received by the proxy server (PXY) or by the multimedia player (MPL).

4. Method according to any of claims 1 to 3, wherein the synchronization data comprise an item of data relating to the number of segments that can be stored in the buffer memory (BFF).

5. Method according to any of claims 1 to 3, wherein the item of data defining the time at which the last segment is received is the time elapsed between the moment at which the last segment is received by the proxy server (PXY) and the moment at which the synchronization data (TMRF) are transmitted, the multimedia player (MPL) storing the time at which the synchronization data are received and determining the time at which the start of the segment identified in the synchronization data is received, according to the time at which the synchronization data are received and the time elapsed in the synchronization data.

6. Method according to any of claims 1 to 5, wherein the synchronization data request is sent following a synchronization error between a multimedia content server (CNTP) and the multimedia player (MPL).

7. Method according to claim 6, wherein the synchronization error occurs when a segment that is not available in the buffer memory (BFF) is requested.

8. Method according to any of claims 1 to 7, wherein the synchronization data request is sent before a first segment of the multimedia content is requested or after the first segment is received.

9. Method according to any of claims 1 to 8, comprising a step of determining, by means of the multimedia player, an identifier of a segment to be requested from the server and to be reproduced, according to a difference between the current time, the time at which the last segment is received and the duration of each segment.

10. Method according to any of claims 1 to 9, wherein the multimedia content is broadcast in accordance with the MPEG-DASH standard, via an MBMS service.

11. System for broadcasting multimedia content, comprising a multimedia content server (CNTP) configured to send multimedia content segment by segment, and user equipment (UE) configured to carry out the method according to any of claims 1 to 10.

12. User equipment comprising a proxy server (PXY) configured to carry out the method according to any of claims 1 to 10.

Fig. 1

Fig. 2A

Fig. 2B

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013007223 A

**Littérature non-brevet citée dans la description**

- *3GPP TS 26.346 V11.5.0,* 2013